(19) Europäisches Patentamt
European Patent Office
Office européen des brevets

(11) **EP 2 354 095 A1**

(12) **DEMANDE DE BREVET EUROPEEN**

(43) Date de publication:
**10.08.2011 Bulletin 2011/32**

(51) Int Cl.:
***C02F 3/00*** (2006.01)      *G06F 19/00* (2011.01)

(21) Numéro de dépôt: **11305109.8**

(22) Date de dépôt: **03.02.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **03.02.2010 FR 1050746**

(71) Demandeurs:
• **Vinci Environnement**
  **92506 Rueil-Malmaison (FR)**
• **Actemium**
  **78360 Montesson (FR)**

• **Endress et Hauser**
  **68330 Huningue (FR)**

(72) Inventeurs:
• **Balmer, Fabrice**
  **78800, HOUILLES (FR)**
• **Fagot, Cédric**
  **76690, FONTAINE-LE-BOURG (FR)**
• **Doro, Dominique**
  **78100, SAINT GERMAIN EN LAYE (FR)**

(74) Mandataire: **Domenego, Bertrand**
  **Cabinet Lavoix**
  **2, place d'Estienne d'Orves**
  **75441 Paris Cedex 09 (FR)**

(54) **Réacteur de purification biologique de l'eau, et procédé de régulation d'un tel réacteur**

(57)      Ce procédé de régulation d'un réacteur (18, 20) de purification biologique de l'eau délimitant un volume (32) de traitement de l'eau et comprenant une entrée d'eau (34), une sortie d'eau (36), un orifice (42) d'entrée d'un réactif et des moyens (44) d'amenée du réactif connectés à l'orifice d'entrée (42), le réacteur (18, 20) étant propre à produire un flux de sortie d'eau purifiée, assure la régulation du débit d'entrée du réactif dans le volume de traitement (32).

Le procédé comprend l'acquisition d'une première variable représentative du traitement de purification.

Le procédé comprend également les étapes suivantes:
- l'acquisition d'une deuxième variable, cette deuxième variable étant représentative du flux de sortie,
- la détermination d'un ordre de commande des moyens d'amenée du réactif (44) en fonction des variables acquises, et
- la commande des moyens d'amenée du réactif (44) à partir de l'ordre de commande déterminé.

FIG.1

EP 2 354 095 A1

Printed by Jouve, 75001 PARIS (FR)

**Description**

La présente invention concerne un procédé de régulation d'un réacteur de purification biologique de l'eau délimitant un volume de traitement de l'eau et comprenant une entrée d'eau, une sortie d'eau, un orifice d'entrée d'un réactif et des moyens d'amenée du réactif connectés à l'orifice d'entrée, le réacteur étant propre à produire un flux de sortie d'eau purifiée,

le procédé assurant la régulation du débit d'entrée du réactif dans le volume de traitement, et comprenant l'acquisition d'une première variable représentative du traitement de purification.

La présente invention concerne également un réacteur de purification biologique de l'eau, délimitant un volume de traitement de l'eau et comprenant une entrée d'eau, une sortie d'eau, un orifice d'entrée d'un réactif, des moyens d'amenée du réactif connectés à l'orifice d'entrée, des premiers moyens d'acquisition d'une première variable représentative du traitement de purification et un dispositif de régulation du débit d'entrée du réactif dans le volume de traitement de l'eau, le réacteur étant propre à produire un flux de sortie d'eau purifiée.

La présente invention concerne également une station d'épuration comprenant un tel réacteur.

On connaît un réacteur de purification biologique à flore fixée fluidisée, également appelé réacteur MBBR (de l'anglais Moving Bed Biological Reactor), délimitant un volume de traitement de l'eau usée et contenant des éléments de support pour la croissance d'un biofilm, les éléments de support étant en mouvement dans l'eau. Le réacteur comprend une entrée d'eau, une sortie d'eau, une entrée d'air et un compresseur connecté à l'entrée d'air. Le biofilm est mis en suspension par l'air délivré par le compresseur, afin de garantir un meilleur contact entre les bactéries du biofilm et la pollution à traiter. Le débit d'air en sortie du compresseur d'air est régulé de manière connue en fonction d'une valeur mesurée de la quantité de dioxygène contenue dans le volume de traitement et d'une valeur cible de ladite quantité de dioxygène, cette valeur cible étant prédéterminée.

Toutefois, un tel procédé de régulation entraîne une consommation électrique importante de la part du réacteur de purification biologique de l'eau.

Un but de l'invention est donc de proposer un procédé de régulation du réacteur permettant de limiter la consommation électrique du réacteur tout en assurant une bonne purification biologique de l'eau.

A cet effet, l'invention a pour objet un procédé de régulation du type précité, caractérisé en ce qu'il comprend les étapes suivantes :

- l'acquisition d'une deuxième variable, cette deuxième variable étant représentative du flux de sortie,
- la détermination d'un ordre de commande des moyens d'amenée du réactif en fonction des variables acquises, et

- la commande des moyens d'amenée du réactif à partir de l'ordre de commande déterminé.

Suivant d'autres modes de réalisation, le procédé comprend une ou plusieurs des caractéristiques suivantes, prises isolément ou suivant toutes les combinaisons techniquement possibles :

- l'étape de détermination comprend une phase de mise en oeuvre d'un régulateur à logique floue, et comporte la construction de variables floues d'entrée à partir des variables acquises et le calcul de l'ordre de commande correspondant à un état parmi un ensemble fini d'états prédéterminés à partir des variables floues d'entrée construites et d'une base de connaissances préalablement définie ;
- les variables floues d'entrée sont établies à partir de courbes définies sur tout l'univers de discours des variables acquises ;
- les courbes sont, dans leur zone non nulle, en forme de triangle ou de trapèze;
- l'ensemble fini d'états de variation prédéterminés comporte une baisse, une stabilisation et une augmentation d'un paramètre représentatif de l'eau contenue dans le volume de traitement ;
- le procédé comprend en outre l'acquisition d'une troisième variable, l'ordre de commande des moyens d'amenée du réactif étant déterminé en fonction des trois variables acquises ;
- le réacteur est un réacteur de prétraitement d'une pollution carbonée, et les variables acquises sont au moins deux variables choisies parmi le groupe de variables constitué de : la vitesse de variation du flux en demande chimique en oxygène d'entrée, le flux en demande chimique en oxygène de sortie et le débit d'eau en entrée du réacteur ;
- le réacteur est un réacteur de traitement d'une pollution carbonée, et les variables acquises sont au moins la vitesse de variation de la concentration en demande chimique en oxygène en sortie du réacteur et la concentration en demande chimique en oxygène en sortie du réacteur ;
- le réacteur est un réacteur de nitrification, et les variables acquises sont au moins la vitesse de variation de la concentration en nitrates en sortie du réacteur et la concentration en nitrates en sortie du réacteur ; et
- le réactif est de l'air.

L'invention a également pour objet un réacteur du type précité, caractérisé en ce qu'il comprend des deuxièmes moyens d'acquisition d'une deuxième variable, cette variable étant représentative du flux de sortie, et en ce que le dispositif de régulation est propre à déterminer un ordre de commande des moyens d'amenée du réactif en fonction des variables acquises, et comporte des moyens d'application de l'ordre de commande déterminé aux moyens d'amenée du réactif.

Suivant d'autres modes de réalisation, le réacteur comprend une ou plusieurs des caractéristiques suivantes, prises isolément ou suivant toutes les combinaisons techniquement possibles :

- le dispositif de régulation comporte un régulateur à logique floue propre à déterminer ledit ordre de commande des moyens d'amenée du réactif ; et
- le réacteur comprend des troisièmes moyens d'acquisition d'une troisième variable, le dispositif de régulation étant propre à déterminer un ordre de commande des moyens d'amenée du réactif en fonction des trois variables acquises.

L'invention a également pour objet une station d'épuration caractérisée en ce qu'elle comprend au moins un réacteur de purification biologique de l'eau tel que défini ci-dessus.

Suivant un autre mode de réalisation, la station d'épuration comprend la caractéristique suivante :

- ledit réacteur de purification biologique est un élément parmi le groupe constitué des réacteurs suivants : un réacteur de prétraitement d'une pollution carbonée, un réacteur de traitement d'une pollution carbonée et un réacteur de nitrification.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'une station d'épuration selon un premier mode de réalisation de l'invention,
- la figure 2 est une représentation schématique du dispositif de régulation d'un réacteur de la station d'épuration de la figure 1,
- la figure 3 est une représentation schématique d'un régulateur à logique floue du dispositif de régulation de la figure 2,
- la figure 4 est un organigramme représentant le procédé de régulation selon l'invention,
- les figures 5 et 6 sont des courbes de détermination de variables floues en fonction des univers de discours pour un réacteur de traitement d'une pollution carbonée de la station d'épuration de la figure 1,
- la figure 7 est un tableau des règles de détermination des étapes possibles de fonctionnement du réacteur en fonction de la logique de prise de décision,
- la figure 8 est un ensemble de courbes limites montrant les zones d'influence des variables floues sur l'ordre de commande à appliquer au moyen d'adjonction du réactif dans le volume de traitement de l'eau,
- la figure 9 est une représentation schématique de la station d'épuration selon un deuxième mode de réalisation de l'invention,

- la figure 10 est une vue analogue à celle de la figure 2 selon le deuxième mode de réalisation de l'invention, et
- les figures 11 à 14 sont des vues analogues respectivement à celles des figures 5 à 8 selon le deuxième mode de réalisation de l'invention.

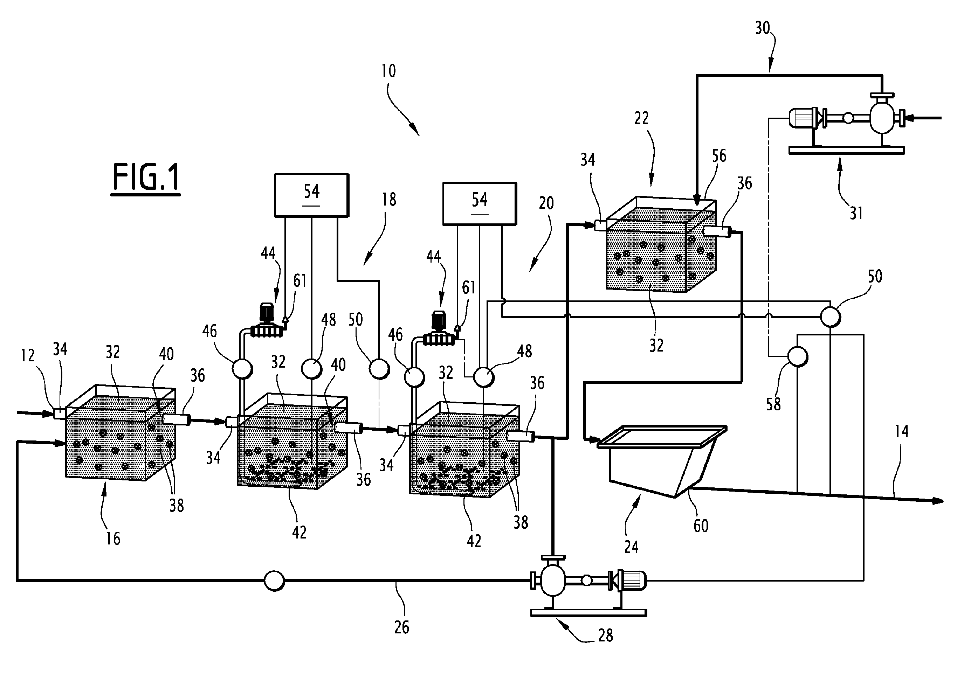

Sur la figure 1, une station d'épuration 10 comporte une entrée 12 d'un effluent à traiter, une sortie 14 de l'effluent traité, ainsi qu'un premier 16, un deuxième 18, un troisième 20 et un quatrième 22 réacteurs de purification et un dispositif de flottation 24. Les quatre réacteurs 16, 18, 20, 22 et le dispositif de flottation 24 sont disposés en cascade entre l'entrée 12 et la sortie 14. Autrement dit, le deuxième réacteur 18 est agencé en sortie du premier réacteur 16, le troisième réacteur 20 est agencé en sortie du deuxième réacteur 18, le quatrième réacteur 22 est agencé en sortie du troisième réacteur 20, et le dispositif de flottation 24 est agencé en sortie du quatrième réacteur 22.

La station d'épuration 10 comporte une boucle 26 de recirculation des nitrates contenus dans l'effluent, équipée d'une première pompe 28, la boucle de recirculation 26 étant agencée entre la sortie du troisième réacteur 20 et l'entrée du premier réacteur 16. La station d'épuration 10 comporte également un circuit 30 d'alimentation du quatrième réacteur de purification 22 en méthanol par l'intermédiaire d'une deuxième pompe 31.

Chacun des réacteurs 16, 18, 20, 22 est, par exemple, un réacteur de purification biologique à flore fixée fluidisée, également appelé réacteur MBBR (de l'anglais Moving Bed Biological Reactor), délimitant un volume 32 de traitement de l'eau et comprenant une entrée 34 d'eau à traiter et une sortie 36 d'eau traitée.

Chaque réacteur 16, 18, 20, 22 comprend des éléments de support 38 pour la croissance d'un biofilm et un filtre 40 d'évacuation de l'eau. Les éléments de support 38 sont destinés à être maintenus en mouvement dans l'eau et gardés à l'intérieur du volume de traitement 32 grâce au filtre 40. Le dimensionnement du filtre 40 est adapté pour retenir les éléments de support 38 tout en permettant l'écoulement de l'eau.

Ce type de réacteur 16, 18, 20, 22 est, de façon connue, particulièrement avantageux par rapport à, par exemple, des réacteurs à traitement par boue activée en permettant une concentration plus importante de bactéries. Le traitement de l'eau s'en trouve accéléré et/ou le volume nécessaire du réacteur est réduit.

Le premier réacteur 16 est un réacteur de dénitrification propre à transformer l'azote oxydé sous forme de nitrates $NO_3^-$ en azote gazeux $N_2$. L'azote oxydé est, d'une part, contenu dans l'effluent à traiter reçu en entrée du premier réacteur 16, et d'autre part produit dans le troisième réacteur 20 et partiellement réintroduit en entrée du premier réacteur 16 par l'intermédiaire de la boucle de recirculation 26. Le premier réacteur 16 ne comporte pas d'entrée d'air, et l'oxydation biochimique à l'intérieur du premier réacteur 16 est possible de par la présence d'oxygène dans les nitrates.

Le deuxième réacteur 18 est un réacteur de traitement d'une pollution carbonée.

Le troisième réacteur 20 est un réacteur de nitrification propre à transformer par l'intermédiaire d'une réaction biochimique l'azote réduit, essentiellement sous forme d'ammoniac $NH_4^+$ et présent dans l'effluent, en azote oxydé sous forme de nitrates $NO_3^-$

Le deuxième réacteur 18 et le troisième réacteur 20 comportent chacun un orifice 42 d'entrée d'un réactif et des moyens 44 d'amenée du réactif connectés à l'orifice d'entrée 42. Les deuxième 18 et troisième 20 réacteurs comportent également un capteur 46 de mesure du débit du réactif disposé entre les moyens d'amenée du réactif 44 et l'orifice d'entrée 42, un deuxième capteur 48 de mesure d'une quantité de dioxygène contenue dans le volume de traitement 32, et un troisième capteur 50 de mesure d'une variable représentative du flux de sortie du réacteur, cette variable étant différente de la quantité de dioxygène contenue dans le volume de traitement.

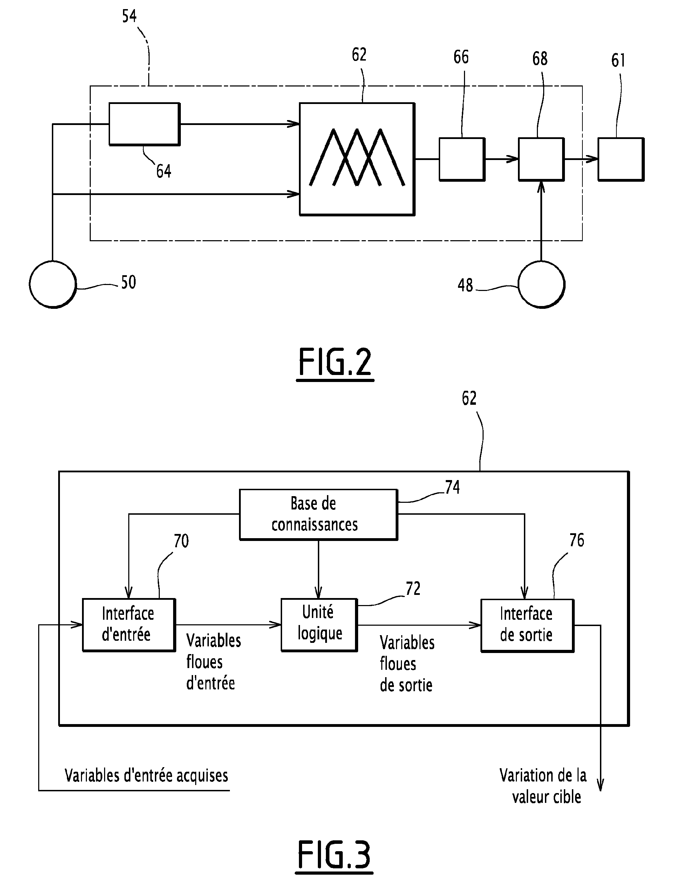

Le deuxième réacteur 18 et le troisième réacteur 20 comportent chacun un dispositif 54 de régulation du débit d'entrée du réactif dans le volume de traitement 32, visible sur les figures 1 et 2.

Le quatrième réacteur 22 est un réacteur de dénitrification comportant en outre une entrée de méthanol 56 connectée à la deuxième pompe 30 pour son alimentation en méthanol. La deuxième pompe 30 est reliée à un quatrième capteur 58 de mesure de la concentration en nitrates $NO_3^-$ dans l'autre étai en sortie du dispositif de flottation 24.

Le quatrième réacteur 22 est propre à diminuer la concentration en nitrates, en complément de la boucle de recirculation 26, afin de satisfaire les normes environnementales.

Le dispositif de flottation 24 est destiné à éliminer la pollution non soluble, telle que des graisses ou des boues, contenue dans l'eau en sortie du dernier réacteur de purification. Le dispositif de flottation 24 permet de collecter les boues ou les graisses en surface, l'eau traitée étant évacuée par une sortie 60 disposée en dessous du dispositif de flottation 24.

Le réactif est, par exemple, de l'air. En variante, le réactif est de l'oxygène pur.

L'orifice d'entrée 42 des deuxième et troisième réacteurs 18, 20 est, par exemple, une entrée d'air disposée en dessous du volume de traitement 32, afin d'améliorer l'aération de l'eau contenue dans le volume de traitement.

Les moyens d'amenée du réactif 44 sont, par exemple, un compresseur équipé d'un variateur 61 du débit d'air en sortie du compresseur.

Le premier capteur 46 est, par exemple, un débitmètre d'air.

Le deuxième capteur 48 est propre à réaliser une mesure en continu de la quantité d'oxygène contenue dans le volume de traitement 32.

Le troisième capteur 50 du deuxième réacteur 18 est agencé entre la sortie d'eau 36 du deuxième réacteur et l'entrée d'eau 34 du troisième réacteur. Le troisième capteur 50 du troisième réacteur 20 est quant à lui disposé en sortie du dispositif de flottation 24.

La variable représentative mesurée par chaque troisième capteur 50 est différente de la quantité de dioxygène contenue dans le volume de traitement, et dépend du réacteur respectif. Plus précisément, le troisième capteur 50 du deuxième réacteur est propre à mesurer la concentration en demande chimique en oxygène (DCO) en sortie du deuxième réacteur 18, cette valeur étant notée DCOs dans la suite de la description. La demande chimique en oxygène est la quantité d'oxygène qui serait nécessaire pour oxyder toute la matière biologique contenue dans le volume de traitement. Le troisième capteur 50 du troisième réacteur est propre à mesurer la concentration en nitrates ($NH_4^+$) en sortie du troisième réacteur 20, cette valeur étant notée $NH_4$s dans la suite de la description.

Le dispositif de régulation 54, visible sur la figure 2, est relié au deuxième capteur 48 et au troisième capteur 50, et est propre à appliquer un ordre de commande au variateur 61 du compresseur. Le dispositif de régulation 54 comporte un régulateur à logique floue 62, un dérivateur 64, des moyens 66 de calcul d'une valeur cible de la quantité de dioxygène contenue dans le volume de traitement, et des moyens 68 de détermination d'un ordre de commande du compresseur 44.

Le régulateur à logique floue 62 est relié, d'une part, directement au troisième capteur 50 afin d'acquérir une première variable d'entrée correspondant à la concentration en DCOs, et d'autre part, au dérivateur 64 afin d'acquérir une deuxième variable d'entrée correspondant à la vitesse de variation de la concentration en DCOs, notée dDCOs/dt. Le régulateur à logique floue 62 est propre, à l'aide de ces deux variables d'entrée acquises, à délivrer une variation de la valeur cible de la quantité de dioxygène $\Delta vc\_O_2$ aux moyens de calcul 66 connectés en sortie du régulateur.

Le régulateur à logique floue 62 comporte une interface d'entrée 70, une unité logique 72, une base de connaissances 74 et une interface de sortie 76, comme représenté sur la figure 3. L'interface d'entrée 70 est propre à transformer les variables d'entrée acquises en variables floues d'entrée à partir de données issues de la base de connaissances 74 mémorisée dans le régulateur. L'unité logique 72 est destinée à créer des variables floues de sortie à partir des variables floues d'entrée et des données contenues dans la base de connaissances 74. La base de connaissances 74 est une base prédéfinie. L'interface de sortie 76 est propre à déterminer la variation de la valeur cible de la quantité de dioxygène $\Delta vc\_O_2$ à partir des variables floues de sortie reçues de l'unité logique 72 et des données contenues dans la base de connaissances 74.

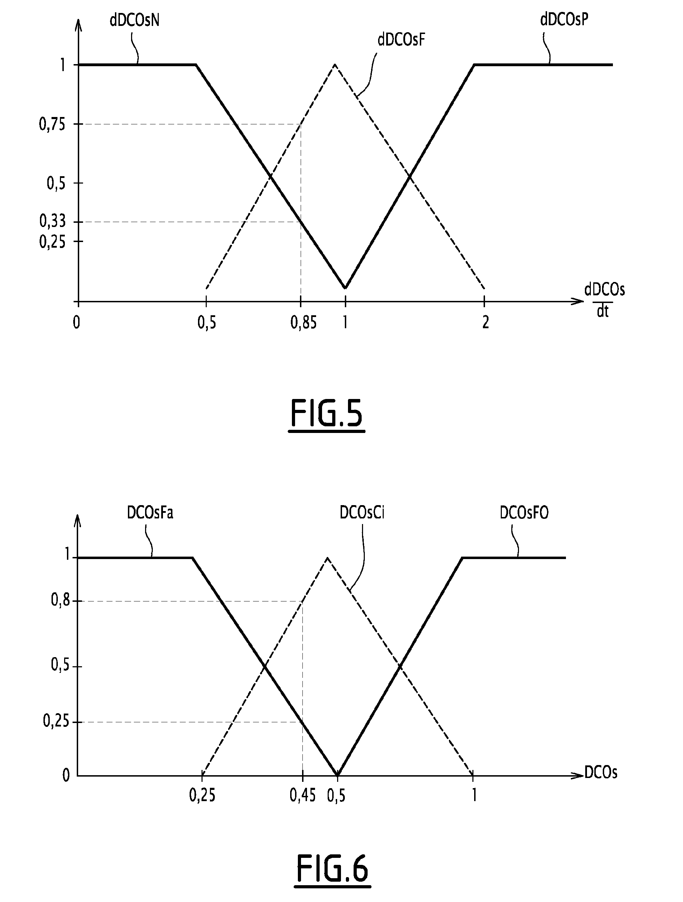

La transformation des variables d'entrée acquises en variables floues d'entrée, le calcul des variables floues de sortie et la détermination de la variation de la valeur cible de la quantité de dioxygène Δvc_O$_2$ seront expliqués dans la suite de la description à l'aide des figures 5 à 8.

Les moyens de calcul 66 sont propres à additionner la variation de la valeur cible Δvc_O$_2$ délivrée par le régulateur 62 et une constante de base de la quantité de dioxygène, afin de calculer la valeur cible de ladite quantité de dioxygène et de la délivrer aux moyens de détermination 68.

Les moyens de détermination 68 sont reliés, d'une part, au deuxième capteur 48 afin de recevoir la valeur mesurée de ladite quantité de dioxygène, et d'autre part, aux moyens de calcul 66 afin de recevoir la valeur cible de ladite quantité de dioxygène. Les moyens de détermination 68 sont propres à déterminer l'ordre de commande du compresseur 44 en fonction de la différence entre la valeur cible et la valeur mesurée de ladite quantité de dioxygène. Le variateur 61 du compresseur est relié en sortie des moyens de détermination 68 afin de recevoir l'ordre de commande déterminé.

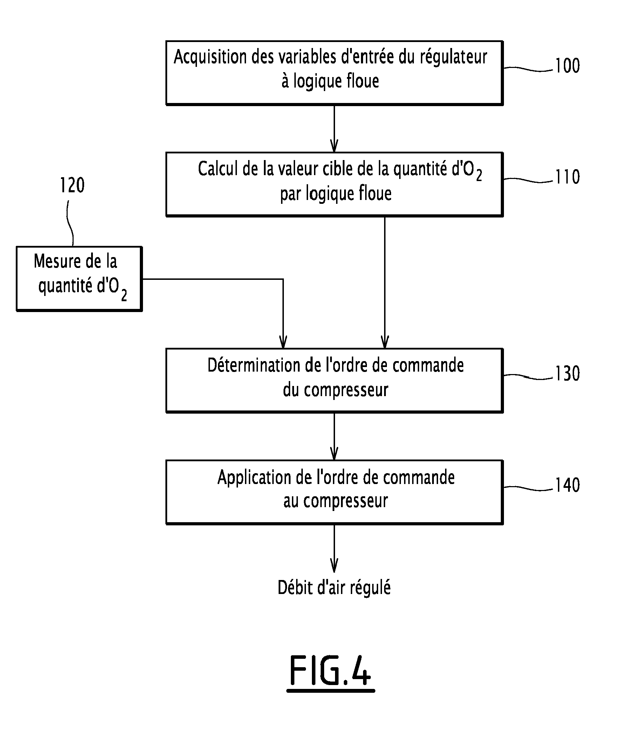

Le procédé de régulation du débit d'entrée d'air dans le volume de traitement va être à présent décrit à l'aide de l'organigramme de la figure 4.

Lors de l'étape initiale 100, les deux variables d'entrée du régulateur à logique floue 62 sont acquises, au moins une des deux variables d'entrée étant représentative du flux de sortie du réacteur respectif.

Lorsque le réacteur est un réacteur de traitement d'une pollution carbonée, tel que le deuxième réacteur 18, les variables d'entrée acquises sont la concentration en demande chimique en oxygène en sortie du réacteur, notée DCOs, et la vitesse de variation de la concentration en DCOs, notée dDCOs/dt.

Lorsque le réacteur est un réacteur de nitrification, tel que le troisième réacteur 20, les variables d'entrée acquises sont la concentration en nitrates en sortie du réacteur, notée NH4s, et la vitesse de variation de la concentration en NH4s, notée dNH4s/dt.

Le régulateur à logique floue 62 calcule alors, lors de l'étape 110, la valeur cible de la quantité de dioxygène contenue dans le volume de traitement 32 à l'aide des variables préalablement acquises. Cette étape 110 de calcul sera décrite plus en détail par la suite à l'aide des figures 5 à 8.

Un ordre de commande du compresseur 44 est ensuite déterminé lors de l'étape 130 par les moyens de détermination 68 en fonction de la différence entre la valeur cible précédemment calculée à l'étape 110 et la valeur mesurée, par le deuxième capteur 48 lors de l'étape 120, de ladite quantité de dioxygène.

Plus précisément, la quantité de dioxygène contenue dans le volume de traitement étant proportionnelle au débit d'entrée d'air dans le volume de traitement, l'ordre de commande du compresseur correspond à une augmentation du débit d'air lorsque la valeur cible de ladite quantité de dioxygène est supérieure à la valeur mesurée de ladite quantité de dioxygène. Inversement, l'ordre de commande du compresseur correspond à une réduction du débit d'air lorsque la valeur mesurée de ladite quantité de dioxygène est supérieure à la valeur cible de ladite quantité de dioxygène. Lorsque la valeur mesurée et la valeur cible de ladite quantité de dioxygène sont sensiblement égales, l'ordre de commande du compresseur correspond à une stabilisation du débit d'air.

L'ordre de commande déterminé à l'étape 130 est enfin appliqué au variateur 61 du compresseur afin d'obtenir un débit d'air régulé en fonction des variables initialement acquises.

L'étape de calcul 110 de la valeur cible de la quantité de dioxygène par mise en oeuvre de la logique floue va maintenant être décrite à l'aide des figures 5 à 8.

L'univers de discours considéré pour la mise en oeuvre du processus de décision par logique floue dans le cas du deuxième réacteur 18 est, d'une part, la vitesse de variation de la concentration en DCOs, et d'autre part, la concentration en DCOs, comme représenté sur les figures 5 et 6.

Dans l'exemple de réalisation des figures 5 et 6, chaque univers de discours est découpé en trois états distincts. Les trois états correspondant à la variable floue d'entrée de l'univers de discours de la vitesse de variation de la concentration en DCOs sont « vitesse négative », également appelé « dérivée négative » et noté dDCOsN, « vitesse faible », également appelé « dérivée faible » et noté dDCOsF, et « vitesse positive », également appelé « dérivée positive » et noté dDCOsP, comme représenté sur la figure 5. Les trois états correspondant à la variable floue d'entrée de l'univers de discours de la concentration en DCOs sont « concentration faible » DCOsFa, « concentration cible » DCOsCi et « concentration forte » DCOsFO, comme représenté sur la figure 6.

Chaque état est, par exemple, défini par une courbe généralement en forme d'un signal triangulaire symétrique et centré sur une valeur de la vitesse de variation de la concentration en DCOs ou de la concentration en DCOs. Ces courbes sont, par exemple, toutes de forme analogue et régulièrement réparties sur l'univers de discours.

Les pentes des signaux triangulaires sont, par exemple, sensiblement égales pour tous les états, et les sommets des courbes sont, par exemple, régulièrement et symétriquement décalés suivant l'axe des abscisses.

En variante, un ou chaque état est défini par une courbe généralement en forme de trapèze, ou encore tout autre forme géométrique définie par une fonction mathématique continue.

Dans l'exemple de réalisation des figures 5 et 6, on suppose que la vitesse de variation en DCOs est égale à 0,85 mg/h et que la concentration en DCOs est égale à 0,45 mg/L.

En projetant les valeurs de la vitesse de variation de la concentration en DCOs et de la concentration en DCOs sur les univers de discours correspondant aux figures 5 et 6, on obtient, à partir de l'interface d'entrée 70, quatre variables floues d'entrée égales à 0,33 dDCOsN et 0,75 dDCOsF pour la vitesse de variation de la concentration en DCOs, et à 0,25 DCOsFa et 0,8 DCOs-Ci pour la concentration en DOS

L'unité logique 72 établit alors, par exemple à partir de la règle du « min-max », des valeurs de variables floues intermédiaires de la manière suivante :

- min (dDCOsN, DCOsFa) = 0,25,
- min (dDCOsN, DCOsCi) = 0,33,
- min (dDCOsF, DCOsFa) = 0,25, et
- min (dDCOsF, DCOsCi) = 0,75.

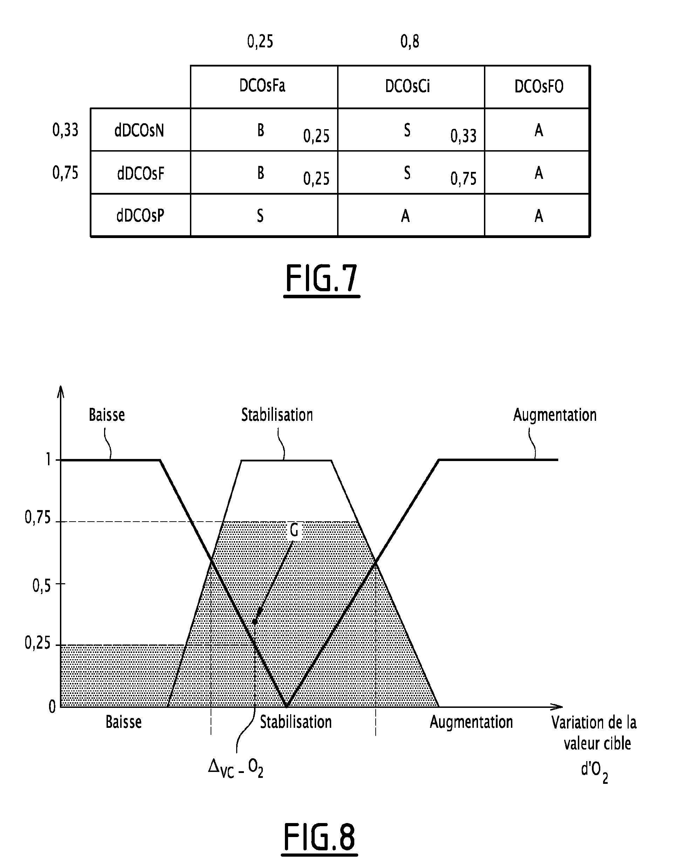

Sur la figure 7, l'ensemble fini d'états de variation prédéterminées de la valeur cible de ladite quantité de dioxygène sont représentés. Les trois états possibles sont une baisse, une stabilisation et une augmentation de la valeur cible de ladite quantité de dioxygène. Ces trois états sont respectivement notés B pour la variable floue « baisse », S pour la variable floue « stabilisation » et A pour la variable floue « augmentation ». Le tableau de la figure 7 indique les états possibles à l'intersection des lignes correspondant aux variables floues associées à la vitesse de variation de la concentration en DCOs et des colonnes correspondant aux variables floues associées à la concentration en DCOs. Le tableau de la figure 7 est défini de manière empirique et ne dépend pas des caractéristiques intrinsèques du réacteur.

Les valeurs des variables floues intermédiaires précédemment définies sont reportées dans le tableau de la figure 7 et on considère alors la valeur maximale associée à chaque variable floue de sortie. Dans l'exemple de réalisation de la figure 7, on obtient alors : - max (baisse) = 0,25, et

$$- \max(\text{stabilisation}) = 0,75.$$

L'interface de sortie 76 détermine alors dans l'univers de discours de sortie, visible sur la figure 8, la variation de la valeur cible de la quantité de dioxygène.

L'univers de discours de sortie comporte trois courbes limites : baisse, stabilisation, augmentation délimitant chacune la zone d'influence correspondant respectivement à la baisse, la stabilisation ou à l'augmentation de la valeur cible de la quantité de dioxygène. L'univers de discours de la variable de sortie correspondant à la variation de la valeur cible est représenté en abscisse.

On reporte alors sur le graphique de la figure 8 les deux variables floues de sortie « 0,25 baisse » et « 0,75 stabilisation » pour définir les zones d'influence privilégiées (en gris sur la figure 8). La variation de la valeur cible $\Delta vc\_O_2$ est obtenue en projetant sur l'axe des abscisses le barycentre G des zones d'influence privilégiées.

Dans l'exemple de la réalisation de la figure 8, la valeur cible de la quantité de dioxygène $\Delta vc\_O_2$ ainsi

déterminée correspond à une stabilisation de ladite valeur cible.

L'homme du métier comprendra que le processus de décision par logique floue pour le troisième réacteur 20 est analogue à celui présenté précédemment pour le deuxième réacteur 18 à l'aide des figures 5 à 8.

En effet, dans le cas d'un réacteur de nitrification, l'univers de discours d'entrée est analogue à celui représenté sur les figures 5 et 6 en considérant les variables acquises respectives du réacteur de nitrification, à savoir la vitesse de variation de la concentration en nitrates en sortie du réacteur, notée $dNH4_s/dt$ et la concentration en nitrates en sortie du réacteur $NH4_s$.

Le tableau des états possibles du processus de décision par logique floue pour le réacteur de nitrification est également analogue au tableau de la figure 7, les trois états possibles étant également notés B pour la variable floue « baisse », S pour la variable floue « stabilisation » et A pour la variable floue « augmentation ».

L'univers de discours de sortie pour le réacteur de nitrification est également analogue à celui représenté sur la figure 8 pour le réacteur de traitement d'une pollution carbonée.

Le procédé de régulation selon l'invention permet ainsi de limiter la consommation en dioxygène, et par conséquent le débit d'air fourni par le compresseur. En outre, le procédé de régulation ne diminue pas les performances du réacteur, et permet de réguler le débit d'air en entrée du réacteur au juste besoin.

On conçoit ainsi que le procédé de régulation selon l'invention permet de limiter la consommation électrique du réacteur tout en assurant une bonne purification biologique de l'eau.

En variante, la station d'épuration comporte un seul réacteur de purification biologique, à savoir le réacteur de traitement d'une pollution carbonée.

En variante, la station d'épuration est constituée de deux réacteurs de purification biologique agencés en cascade, à savoir le réacteur de traitement d'une pollution carbonée et le réacteur de nitrification, le réacteur de nitrification étant disposé en sortie du réacteur de traitement de la pollution carbonée.

En variante, la station d'épuration est constituée de trois réacteurs de purification biologique agencés en cascade, à savoir le réacteur de dénitrification, le réacteur de traitement de la pollution carbonée disposé en sortie du réacteur de dénitrification, et le réacteur de nitrification disposé en sortie du réacteur de traitement de la pollution carbonée.

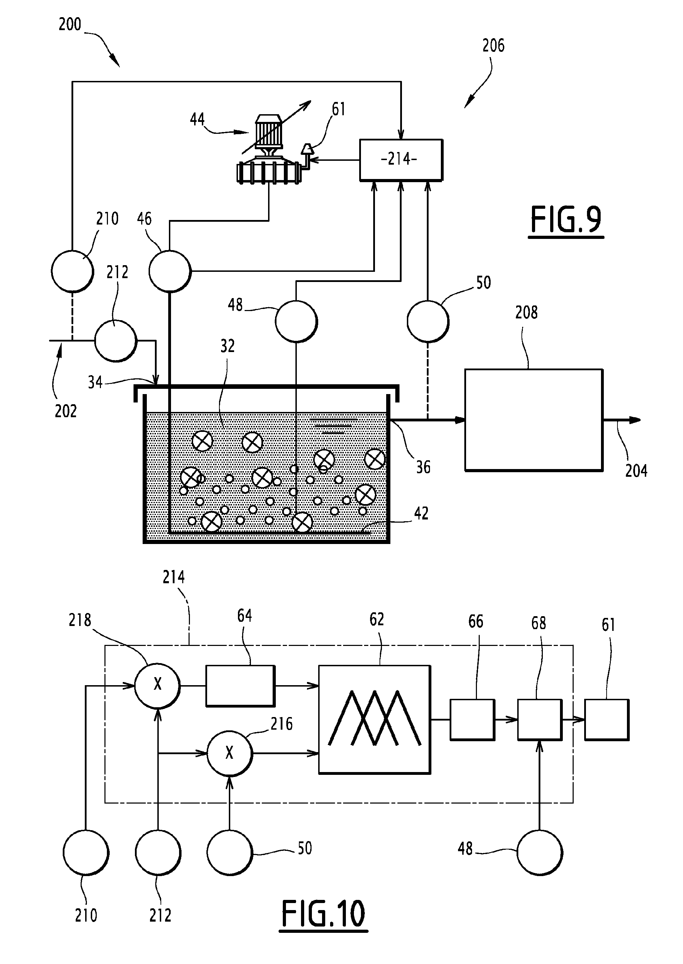

Les figures 9 à 14 illustrent un deuxième mode de réalisation pour lequel les éléments analogues au premier mode de réalisation, décrits précédemment, sont repérés par des références identiques, et ne sont pas décrits à nouveau.

Selon le deuxième mode de réalisation, une station d'épuration 200 comporte une entrée 202 d'un effluent à traiter, une sortie 204 de l'effluent traité, ainsi qu'un réacteur 206 de pré-traitement d'une pollution carbonée et un réacteur à boue activée 208 disposés en cascade entre l'entrée 202 et la sortie 204. Autrement dit, le réacteur à boue activée 208 est agencé en sortie du réacteur de pré-traitement 206.

Le réacteur de pré-traitement 206 est, par exemple, un réacteur de purification biologique à flore fixée fluidisée, également appelé réacteur MBBR (de l'anglais Moving Bed Biological Reactor), délimitant le volume 32 de traitement de l'eau et comprenant l'entrée d'eau à traiter 34 et la sortie d'eau traitée 36. Le réacteur de pré-traitement 206 comprend les éléments de support 38 pour la croissance d'un biofilm et le filtre 40 d'évacuation de l'eau.

Le réacteur de pré-traitement 206 comporte l'orifice d'entrée 42 et les moyens 44 d'amenée du réactif connectés à l'orifice d'entrée 42.

Le réacteur de pré-traitement 206 comporte également le premier capteur 46 de mesure du débit du réactif disposé entre les moyens d'amenée du réactif 44 et l'orifice d'entrée 42, le deuxième capteur 48 de mesure d'une quantité de dioxygène contenue dans le volume de traitement 32, le troisième capteur 50 de mesure d'une variable représentative du flux de sortie du réacteur, un quatrième capteur 210 de mesure d'une deuxième variable représentative du flux de sortie du réacteur, et un cinquième capteur 212 de mesure du débit d'eau en entrée du réacteur de pré-traitement. Les deux variables représentatives sont différentes de la quantité de dioxygène contenue dans le volume de traitement.

Le réactif est, par exemple, de l'air.

Le réacteur de pré-traitement 206 comporte un dispositif 214 de régulation du débit d'entrée d'air dans le volume de traitement 32, comme représenté sur les figures 9 et 10.

Le quatrième capteur 210 est agencé entre l'entrée de l'effluent à traiter 202 et l'entrée d'eau 34 du réacteur de pré-traitement. Il est propre à mesurer la concentration en demande chimique en oxygène (DCO) en entrée du réacteur de pré-traitement, cette valeur étant notée DCOe dans la suite de la description.

Le cinquième capteur 212 est un débitmètre d'eau agencé entre l'entrée de l'effluent à traiter 202 et l'entrée d'eau 34 du réacteur de pré-traitement, afin de mesurer le débit d'eau Qe en entrée du réacteur de pré-traitement.

Le dispositif de régulation 214, visible sur la figure 10, est relié au deuxième capteur 48, au troisième capteur 50, au quatrième capteur 210 et au cinquième capteur 212. Il est propre à appliquer un ordre de commande au variateur 61. Le dispositif de régulation 214 comporte le régulateur à logique floue 62, le dérivateur 64, les moyens 66 de calcul d'une valeur cible de la quantité de dioxygène contenue dans le volume de traitement, les moyens 68 de détermination d'un ordre de commande du compresseur 44, et un premier 216 et un deuxième 218 multiplicateurs. Le premier multiplicateur 216 est connecté en sortie des troisième 50 et cinquième 212 capteurs, et le deuxième multiplicateur 218 est connecté en sortie des quatrième 210 et cinquième 212 capteurs.

Le régulateur à logique floue 62 est relié, d'une part, au premier multiplicateur 216 afin d'acquérir une première variable d'entrée correspondant à un flux en DCO de sortie, également appelé flux de sortie et noté Fs, et d'autre part, au dérivateur 64 afin d'acquérir une deuxième variable d'entrée correspondant à la vitesse de variation d'un flux en DCO d'entrée, également appelé vitesse de variation du flux d'entrée et notée dFe/dt. Le régulateur à logique floue 62 est propre, à l'aide de ces deux variables d'entrée acquises, à délivrer une variation de la valeur cible de la quantité de dioxygène $\Delta vc\_O_2$ aux moyens de calcul 66 connectés en sortie du régulateur.

Le flux Fe est égal au produit du débit d'entrée Qe et de la concentration en DCOe, et le flux Fs est égal au produit du débit d'entrée Qe et de la concentration en DCOs.

En variante, le régulateur à logique floue 62 est propre à acquérir une troisième variable d'entrée, et à délivrer, à l'aide de ces trois variables d'entrée acquises, une variation de la valeur cible de la quantité de dioxygène $\Delta vc\_O_2$ aux moyens de calcul 66 connectés en sortie du régulateur. Le régulateur à logique floue 62 est, par exemple, également relié au cinquième capteur 212, la troisième variable d'entrée acquise correspondant alors au débit d'eau Qe en entrée du réacteur de pré-traitement.

Le procédé de régulation du débit d'entrée du réactif dans le volume de traitement est analogue à celui du premier mode de réalisation décrit précédemment, à l'exception de l'étape de calcul de la valeur cible décrite ci-après.

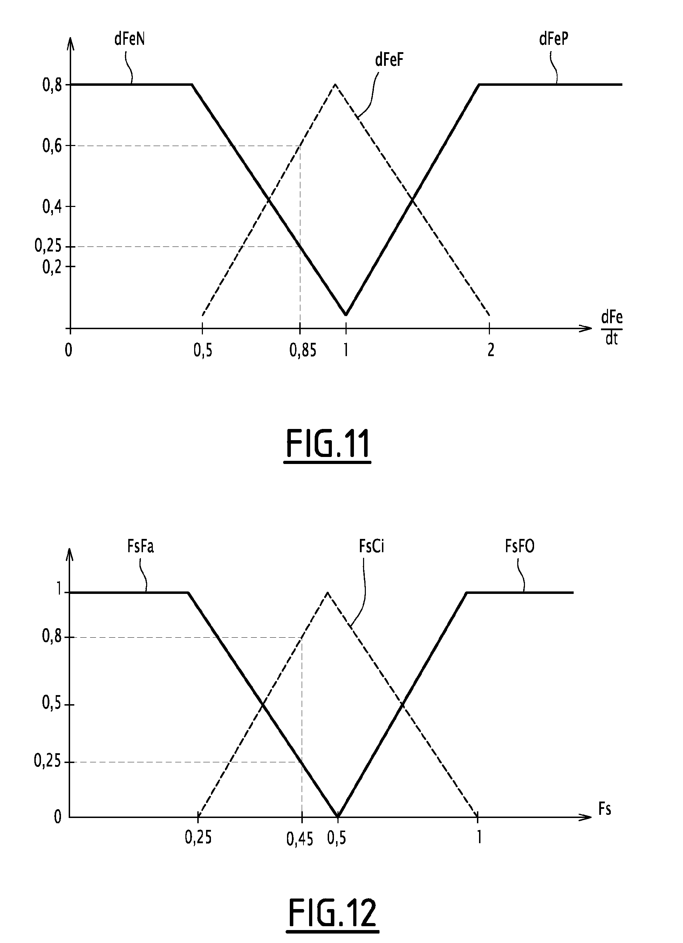

L'étape de calcul de la valeur cible de la quantité de dioxygène par mise en oeuvre de la logique floue va maintenant être décrite à l'aide des figures 11 à 14 et par analogie avec le premier mode de réalisation.

L'univers de discours considéré est, d'une part, la vitesse de variation du flux Fe, et d'autre part, le flux Fs, comme représenté sur les figures 11 et 12.

Dans l'exemple de réalisation des figures 11 et 12, chaque univers de discours est découpé en trois états distincts. Les trois états correspondant à la variable floue d'entrée de l'univers de discours de la vitesse de variation du flux d'entrée Fe sont « vitesse négative » dFeN, « vitesse faible » dFeF, et « vitesse positive » dFeP, comme représenté sur la figure 11. Les trois états correspondant à la variable floue d'entrée de l'univers de discours du flux de sortie Fs sont « flux faible » FsFa, « flux cible » FsCi et « flux » FsFO, comme représenté sur la figure 12.

Les courbes définissant chaque état sont analogues à celles du premier mode de réalisation visibles sur les figures 5 et 6.

Dans l'exemple de réalisation des figures 5 et 6, on suppose que la vitesse de variation du flux d'entrée Fe est égale à 0,85 mg/h et que le flux de sortie Fs est égal à 0,45 mg/h.

On obtient alors quatre variables floues d'entrée égales à 0,25 dFeN et 0,6 dFeF pour la vitesse de variation du flux d'entrée Fe, et à 0,25 FsFa et 0,8 FsCi pour le flux de sortie Fs.

Les valeurs de variables floues intermédiaires sont définies de la manière suivante :

- min (dFeN, FsFa) = 0,25,
- min (dFeN, FsCi) = 0,25,
- min (dFeF, FsFa) = 0,25, et
- min (dFeF, FsCi) = 0,6.

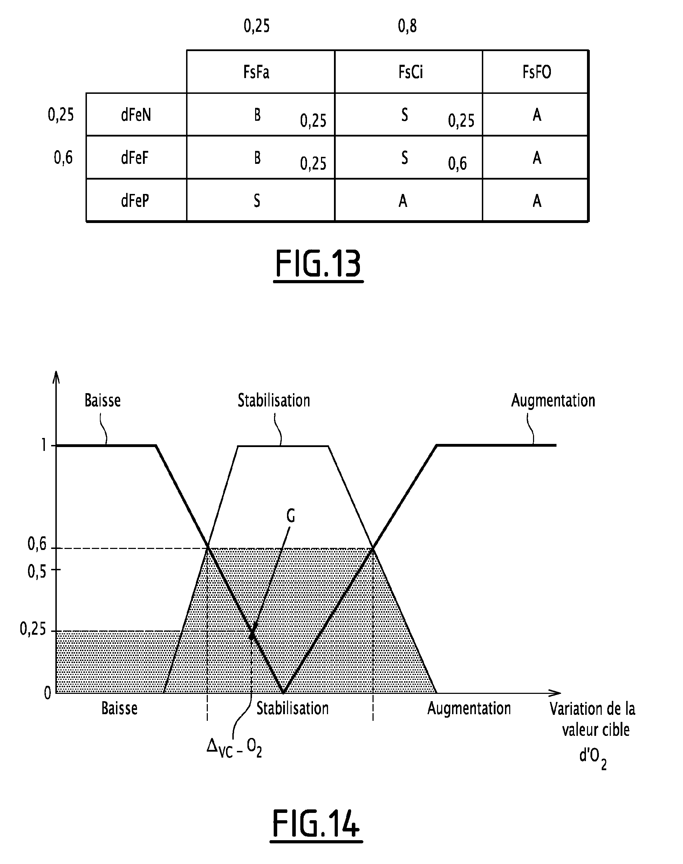

Sur la figure 13, les trois états possibles sont également la baisse B, la stabilisation S et l'augmentation A de la valeur cible de ladite quantité de dioxygène.

Les valeurs des variables floues intermédiaires précédemment définies sont reportées dans le tableau de la figure 13 et on considère alors la valeur maximale associée à chaque variable floue de sortie.

Dans l'exemple de réalisation de la figure 13, on obtient alors :

- max(baisse) = 0,25, et
- max(stabilisation) = 0,6.

L'univers de discours de sortie, visible sur la figure 14, est analogue à celui du premier mode de réalisation.

On reporte alors sur le graphique de la figure 14 les deux variables floues de sortie « 0,25 baisse » et « 0,6 stabilisation » pour déterminer la valeur cible de la quantité de dioxygène $\Delta vc\_O_2$, celle-ci correspondant à une stabilisation de ladite valeur cible dans l'exemple de la figure 14.

Les avantages de ce deuxième mode de réalisation sont analogues à ceux du premier mode de réalisation, et ne sont pas décrits à nouveau.

On conçoit ainsi que le procédé de régulation selon l'invention permet de limiter la consommation électrique du réacteur tout en assurant une bonne purification biologique de l'eau.

## Revendications

1. Procédé de régulation d'un réacteur (18, 20 ; 206) de purification biologique de l'eau délimitant un volume (32) de traitement de l'eau et comprenant une entrée d'eau (34), une sortie d'eau (36), un orifice (42) d'entrée d'un réactif et des moyens (44) d'amenée du réactif connectés à l'orifice d'entrée (42), le réacteur (18, 20 ; 206) étant propre à produire un flux de sortie d'eau purifiée,
le procédé assurant la régulation du débit d'entrée du réactif dans le volume de traitement (32), comprenant l'acquisition d'une première variable (dDCOs/dt, dNH4s/dt ; dFe/dt) représentative du traitement de purification et étant **caractérisé en ce qu'**il comprend les étapes suivantes :

- l'acquisition d'une deuxième variable (DCOs, NH4s ; Fs), cette deuxième variable étant représentative du flux de sortie,
- la détermination d'un ordre de commande des moyens d'amenée du réactif (44) en fonction des variables acquises (dDCOs/dt, DCOs, dNH4s/dt, NH4s ; dFe/dt, Fs), et
- la commande des moyens d'amenée du réactif (44) à partir de l'ordre de commande déterminé.

2. Procédé selon la revendication 1, dans lequel l'étape de détermination comprend une phase de mise en oeuvre d'un régulateur à logique floue (62), et comporte la construction de variables floues d'entrée à partir des variables acquises (dDCOs/dt, DCOs, dNH4s/dt, NH4s ; dFe/dt, Fs) et le calcul de l'ordre de commande correspondant à un état parmi un ensemble fini d'états prédéterminés à partir des variables floues d'entrée construites et d'une base de connaissances (74) préalablement définie.

3. Procédé selon la revendication 2, dans lequel les variables floues d'entrée sont établies à partir de courbes définies sur tout l'univers de discours des variables acquises.

4. Procédé selon la revendication 3, dans lequel les courbes sont, dans leur zone non nulle, en forme de triangle ou de trapèze.

5. Procédé selon l'une quelconque des revendications 2 à 4, dans lequel l'ensemble fini d'états de variation prédéterminés comporte une baisse (B), une stabilisation (S) et une augmentation (A) d'un paramètre représentatif de l'eau contenue dans le volume de traitement (32).

6. Procédé selon l'une quelconque des revendications 1 à 5, comprenant en outre l'acquisition d'une troisième variable (Qe), l'ordre de commande des moyens d'amenée du réactif (44) étant déterminé en fonction des trois variables acquises.

7. Procédé selon l'une quelconque des revendications 1 à 6, dans lequel le réacteur est un réacteur de prétraitement d'une pollution carbonée (206), et dans lequel les variables acquises sont au moins deux variables choisies parmi le groupe de variables constitué de : la vitesse de variation du flux en demande chimique en oxygène d'entrée (dFe/dt), le flux en demande chimique en oxygène de sortie (Fs) et le débit d'eau (Qe) en entrée du réacteur (206).

8. Procédé selon l'une quelconque des revendications 1 à 6, dans lequel le réacteur est un réacteur de traitement d'une pollution carbonée (18), et dans lequel les variables acquises sont au moins la vitesse de variation de la concentration en demande chimique en oxygène en sortie du réacteur (dDCOs/dt) et la concentration en demande chimique en oxygène en sortie du réacteur (DCOs).

9. Procédé selon l'une quelconque des revendications 1 à 6, dans lequel le réacteur est un réacteur de nitrification (20), et dans lequel les variables acquises sont au moins la vitesse de variation de la concentration en nitrates en sortie du réacteur (dNH4s/dt) et la concentration en nitrates en sortie du réacteur (NH4s).

10. Procédé selon l'une quelconque des revendications précédentes, dans lequel le réactif est de l'air.

11. Réacteur (18, 20 ; 206) de purification biologique de l'eau, délimitant un volume de traitement de l'eau (32) et comprenant une entrée d'eau (34), une sortie d'eau (36), un orifice (42) d'entrée d'un réactif, des moyens (44) d'amenée du réactif connectés à l'orifice d'entrée (42), des premiers moyens (50, 64 ; 210, 212, 218, 64) d'acquisition d'une première variable (dDCOs/dt, dNH4s/dt ; dFe/dt) représentative du traitement de purification et un dispositif (54 ; 214) de régulation du débit d'entrée du réactif dans le volume de traitement de l'eau (32), le réacteur (18, 20 ; 206) étant propre à produire un flux de sortie d'eau purifiée,
caractérisé en ce qu'il comprend des deuxièmes moyens (50 ; 50, 212, 216) d'acquisition d'une deuxième variable (DCOs, NH4s ; Fs), cette variable étant représentative du flux de sortie, et en ce que le dispositif de régulation (54 ; 214) est propre à déterminer un ordre de commande des moyens d'amenée du réactif (44) en fonction des variables acquises (dDCOs/dt, DCOs, dNH4s/dt, NH4s ; dFe/dt, Fs), et comporte des moyens (68) d'application de l'ordre de commande déterminé aux moyens d'amenée du réactif (44).

12. Réacteur (18, 20 ; 206) selon la revendication 11, dans lequel le dispositif de régulation (54 ; 214) comporte un régulateur à logique floue (62) propre à déterminer ledit ordre de commande des moyens d'amenée du réactif (44).

13. Réacteur (206) selon la revendication 11 ou 12, comprenant des troisièmes moyens (212) d'acquisition d'une troisième variable (Qe), le dispositif de régulation (214) étant propre à déterminer un ordre de commande des moyens d'amenée du réactif (44) en fonction des trois variables acquises (dFe/dt, Fs, Qe).

14. Station d'épuration (10 ; 200) **caractérisée en ce**

qu'elle comprend au moins un réacteur de purification biologique de l'eau (18, 20 ; 206) selon l'une quelconque des revendications 11 à 13.

15. Station d'épuration (10 ; 200) selon la revendication 14, dans laquelle ledit réacteur de purification biologique est un élément parmi le groupe constitué des réacteurs suivants : un réacteur de prétraitement d'une pollution carbonée (206), un réacteur de traitement d'une pollution carbonée (18) et un réacteur de nitrification (20).

**FIG.1**

## FIG.2

Base de connaissances

Interface d'entrée

Variables floues d'entrée

Unité logique

Variables floues de sortie

Interface de sortie

Variables d'entrée acquises

Variation de la valeur cible

## FIG.3

Acquisition des variables d'entrée du régulateur
à logique floue ——100

Calcul de la valeur cible de la quantité d'$O_2$
par logique floue ——110

120

Mesure de la
quantité d'$O_2$

Détermination de l'ordre de commande
du compresseur ——130

Application de l'ordre de commande
au compresseur ——140

Débit d'air régulé

FIG.4

## FIG.5

## FIG.6

|  | 0,25 | 0,8 | |
|---|---|---|---|
|  | DCOsFa | DCOsCi | DCOsFO |
| 0,33 dDCOsN | B 0,25 | S 0,33 | A |
| 0,75 dDCOsF | B 0,25 | S 0,75 | A |
| dDCOsP | S | A | A |

## FIG.7

## FIG.8

FIG.9

FIG.10

## FIG.11

## FIG.12

|  | 0,25 | 0,8 |  |
|---|---|---|---|
|  | FsFa | FsCi | FsFO |
| 0,25 — dFeN | B   0,25 | S   0,25 | A |
| 0,6 — dFeF | B   0,25 | S   0,6 | A |
| dFeP | S | A | A |

## FIG.13

FIG.14

Europäisches
Patentamt

European
Patent Office

Office européen
des brevets

## RAPPORT DE RECHERCHE EUROPEENNE

Numéro de la demande

EP 11 30 5109

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 375 436 A1 (HERMEX SOC [FR]) 2 janvier 2004 (2004-01-02) * abrégé * * alinéas [0032], [0 38] - [0040] * ----- | 1-15 | INV. C02F3/00 ADD. G06F19/00 |
| X | WO 2006/056212 A2 (KRUEGER AS I [DK]; ROSEN CHRISTIAN [SE]; INGILDSEN PERNILLE [DK]; MUNK) 1 juin 2006 (2006-06-01) * alinéa [0101]; revendications * ----- | 1-15 | |
| A | WO 93/07088 A1 (KRUEGER I SYSTEMS AS [DK]) 15 avril 1993 (1993-04-15) * figures * ----- | 3,4,12 | |

DOMAINES TECHNIQUES RECHERCHES (IPC)

C02F

Le présent rapport a été établi pour toutes les revendications

| Lieu de la recherche | Date d'achèvement de la recherche | Examinateur |
|---|---|---|
| Munich | 18 mai 2011 | Serra, Renato |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 2 354 095 A1**

## ANNEXE AU RAPPORT DE RECHERCHE EUROPEENNE
## RELATIF A LA DEMANDE DE BREVET EUROPEEN NO.

EP 11 30 5109

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-05-2011

| Document brevet cité au rapport de recherche | | Date de publication | Membre(s) de la famille de brevet(s) | | Date de publication |
|---|---|---|---|---|---|
| EP 1375436 | A1 | 02-01-2004 | FR | 2841236 A1 | 26-12-2003 |
| WO 2006056212 | A2 | 01-06-2006 | EP | 1817262 A2 | 15-08-2007 |
| WO 9307088 | A1 | 15-04-1993 | AT | 142172 T | 15-09-1996 |
| | | | AU | 663340 B2 | 05-10-1995 |
| | | | AU | 2759792 A | 03-05-1993 |
| | | | DE | 69213478 D1 | 10-10-1996 |
| | | | EP | 0642469 A1 | 15-03-1995 |
| | | | ES | 2093856 T3 | 01-01-1997 |
| | | | FI | 941520 A | 31-03-1994 |
| | | | GR | 3021722 T3 | 28-02-1997 |
| | | | JP | 6510943 T | 08-12-1994 |
| | | | NO | 941034 A | 22-03-1994 |
| | | | US | 5589068 A | 31-12-1996 |

EPO FORM P0460

Pour tout renseignement concernant cette annexe : voir Journal Officiel de l'Office européen des brevets, No.12/82